# EUROPEAN PATENT APPLICATION

(11) **EP 4 507 072 A1**
(43) Date of publication of application: **12.02.2025**
(21) Application number: 24193459.5
(22) Date of filing: 08.08.2024
(51) Int. Cl.: H01M 10/658, H01M 50/209, H01M 50/224, H01M 50/229, H01M 50/231, H01M 50/28, H01M 50/282, H01M 50/383

(54) **BATTERY MODULE INCLUDING HOUSING MEMBER COMPRISING FLAME RETARDANT COMPOSITE MATERIAL**

(30) Priority: 10.08.2023 KR 20230105034
(71) Applicant: SK On Co., Ltd., Seoul 03161 (KR)
(72) Inventor: LEE, Jong Chan, 34124 Daejeon (KR); PARK, Chi Min, 34124 Daejeon (KR)
(74) Representative: Stolmár & Partner Patentanwälte PartG mbB

(57) **Abstract**

The present disclosure relates to a battery module capable of improving structural rigidity while effectively suppressing heat or flame from spreading. In detail, there is provided a battery module in which a plurality of secondary battery cells are accommodated in a housing member including an upper case, a lower case, and a side cover that are coupled to each other through a fastening part, in which the upper case is made of a retardant composite material including an insulating layer that includes a long inorganic fiber network and an organic binder formed by weaving a plurality of first fibers (weft) arranged in a first direction and a plurality of second fibers (warp) arranged in a second direction intersecting the first direction.

## Description

### TECHNICAL FIELD

The following disclosure relates to a battery module including a housing member comprising a retardant composite material.

### BACKGROUND

Secondary batteries that are easy to apply according to product groups and have electrical characteristics such as high energy density are universally applied not only to portable devices, but also to an electric vehicle (EV) or a hybrid vehicle (HEV) driven by an electric driving source.

When a higher output voltage is required, a battery pack may be formed by connecting a plurality of battery cells in series or in parallel. Typically, a battery module including at least one battery cell is first constructed, and at least one battery module and other components are added to form a battery pack or a battery rack.

Meanwhile, the secondary batteries have a risk of ignition when overheated, so ensuring safety is an important task.

For example, when an abnormal heat generation phenomenon occurs due to various causes such as overcharge, overcurrent, short circuit, or physical shock, a flame or fire may occur, and ultimately, the secondary batteries may be exploded due to a thermal runaway phenomenon. In particular, when the plurality of secondary batteries are included in the battery module or the battery pack, the problem of stability becomes more serious.

Conventionally, in order to prevent the flame from spreading, a method of providing a cooling member for cooling within a battery module or providing a cartridge containing a thermally conductive additive has been performed. However, the method is for cooling heat generated when the battery is driven and has limitations in that it does not function in the thermal runaway situations such as cell explosion.

In particular, metals such as aluminum or heat-resistant plastic are contained in materials for the housing member in which the plurality of secondary battery cells are accommodated. However, when a flame higher or equal to 1000°C occurs, a hole is generated locally, and the flame spreads rapidly through the hole, causing problems of accelerating the thermal runaway phenomenon.

Accordingly, there is a need to develop a battery module capable of suppressing a flame from spreading in the event of a fire within a battery module and ensuring long-term stability.

### SUMMARY

An embodiment of the present invention is directed to providing a battery module including a housing member comprising a retardant composite material capable of suppressing heat or flame from spreading when a secondary battery cell ignites

Another embodiment of the present invention is directed to providing a battery module including a housing member comprising a retardant composite material having excellent structural rigidity to withstand stress intensively generated by a swelling phenomenon of a secondary battery cell in the battery module.

Objects of the present disclosure are not limited to the above-mentioned objects. That is, other objects that are not mentioned may be obviously understood by those skilled in the art to which the present disclosure pertains from the following description.

In one general aspect, there is provided a battery module in which a plurality of secondary battery cells are accommodated in a housing member including an upper case, a lower case, and a side cover that are coupled to each other through a fastening part, in which the upper case is made of a retardant composite material including an insulating layer that includes a long inorganic fiber network and an organic binder formed by weaving a plurality of first fibers (weft) arranged in a first direction and a plurality of second fibers (warp) arranged in a second direction intersecting the first direction.

The upper case may further include a metal member.

The metal member may be located on the outermost side or inside the upper case.

The metal member may be located to be connected to one or more fastening parts located at both ends of the upper case.

Two or more fastening parts located at one end of the upper case may be located in continuous contact with the metal member.

The metal member may include the fastening part and may be located on at least one surface of the upper case.

The insulating layer may have a plurality of unit insulating layers stacked therein.

A direction of the first fiber (weft) of each unit insulating layer located in contact with the plurality of unit insulating layers may be the same or different from each other.

The insulating layer may have one to ten unit insulating layers stacked therein.

The unit insulating layer may further include inorganic filler.

The inorganic filler may include one or two selected from an endothermic material and a thermally expandable material.

The endothermic material may include one or two or more selected from the group consisting of aluminum hydroxide, talc, calcium carbonate, diatomaceous earth, titanium oxide, zeolite, or white carbon.

The thermally expandable material may include one or two or more selected from the group consisting of mica, biotite, muscovite, vermiculite, kaolin, thermally expandable graphite, perlite, and bentonite.

The long inorganic fiber may include glass long fiber.

The organic binder may include a curable polymer.

The curable polymer may include unsaturated polyester.

In another general aspect, there is provided a battery pack including a battery module in which a plurality of secondary battery cells are accommodated in a housing member including an upper case, a lower case, and a side cover that are coupled to each other through a fastening part, in which the upper case is made of a retardant composite material including an insulating layer that includes a long inorganic fiber network and an organic binder formed by weaving a plurality of first fibers (weft) arranged in a first direction and a plurality of second fibers (warp) arranged in a second direction intersecting the first direction.

### BRIEF DESCRIPTION OF THE DRAWINGS

FIG. 1 is a perspective view schematically illustrating a battery module according to an embodiment of the present disclosure.
FIG. 2 is an exploded perspective view of the battery module illustrated in FIG. 1.
FIG. 3 is an enlarged view of an upper case further including a metal member according to an embodiment of the present disclosure.
FIG. 4 is an enlarged view of an upper case further including a metal member according to another embodiment of the present disclosure.
FIG. 5 is an enlarged view of an upper case further including a metal member according to another embodiment of the present disclosure.
FIG. 6 is an enlarged view of an upper case further including a metal member according to another embodiment of the present disclosure.

### [Detailed Description of Main Elements]

| | | | |
|---|---|---|---|
| 100: | Battery module | 10: | Secondary battery cell |
| 15: | Electrode lead | 1: | Fastening part |
| 20: | Insulating member | 30: | Housing |
| 40: | Lower case | 42: | First plate |
| 48: | Side plate | 50: | Upper case |
| 52: | Terminal hole | 60: | Side cover |
| 70: | Circuit part | 72: | Connection terminal |
| 80: | Bus bar | 90: | Insulating plate |
| 500: | Metal member | 501: | First metal member |
| 502: | Second metal member | | |

### DETAILED DESCRIPTION OF EMBODIMENTS

A singular form of a term used herein may be construed to include a plural form as well unless otherwise indicated.

Numerical ranges as used herein include all possible combinations of lower and upper limits and all values within that range, all values defined herein, and upper and lower limits of numerical ranges defined in different forms. Unless otherwise defined in the specification of the present specification, values out of a numerical range that may occur due to experimental errors or rounding of values are also included in the defined numerical range.

"Including" mentioned herein is an open-ended description having an equivalent meaning to expressions such as "comprising", "containing", "having", "characterizing", and elements, materials, or processes not listed additionally are not excluded.

As used herein, expressions such as 'woven long inorganic fiber' or 'woven long inorganic fiber network' refer to a long inorganic fiber network formed by weaving a plurality of first fibers (weft) arranged in a first direction and a plurality of second fibers (warp) arranged in a second direction intersecting the first direction. In an angle mentioned herein, + refers to a clockwise angle and - refers to a counterclockwise angle.

One implementation example of the present disclosure relates to a battery module in which a plurality of secondary battery cells are accommodated in a housing member including an upper case, a lower case, and a side cover that are coupled to each other through a fastening part, in which the upper case is made of a retardant composite material including an insulating layer that includes a long inorganic fiber network and an organic binder formed by weaving a plurality of first fibers (weft) arranged in a first direction and a plurality of second fibers (warp) arranged in a second direction intersecting the first direction.

By having the above-described structural combination, it is possible to effectively suppress heat or flame from spreading during ignition.

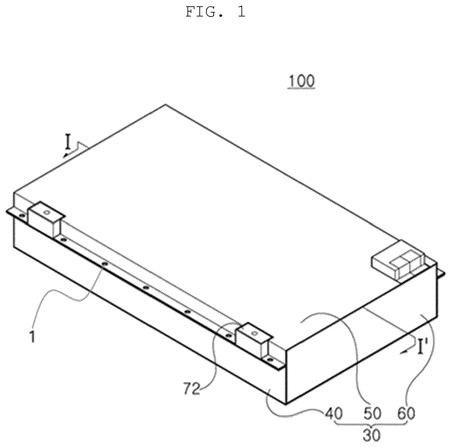

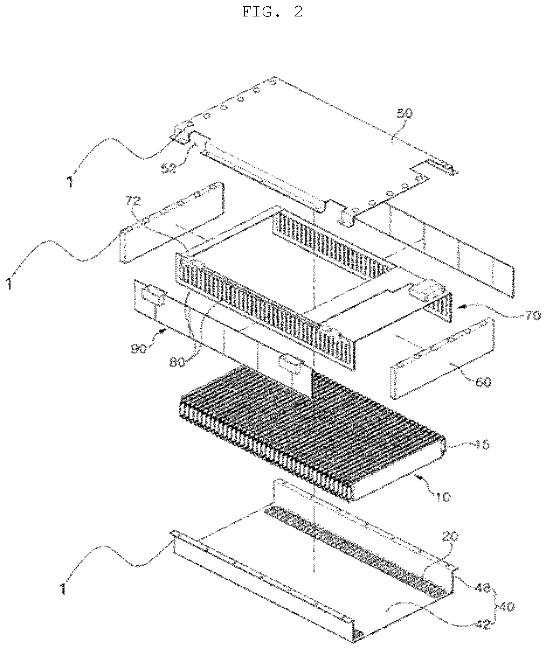

FIG. 1 is a perspective view schematically illustrating a battery module according to an embodiment of the present disclosure, and FIG. 2 is an exploded perspective view of the battery module illustrated in FIG. 1.

Referring to FIGS. 1 and 2, a battery module 100 according to an embodiment of the present disclosure may have a hexahedral shape and may include a housing 30 that protects a plurality of secondary battery cells 10 from the outside.

In this case, the housing 30 may include a lower case 40, an upper case 50, and a side cover 60 that accommodate the plurality of secondary battery cells 10 therein, and the lower case 40, the upper case 50, and the side cover 60 may be connected to each other using fixing members such as bolts or screws through the fastening part 1.

The lower case 40 may include a first plate 42 supporting a lower surface of the plurality of secondary battery cells 10 and a side plate 48 supporting a side surface. In this case, the first plate 42 and the side plate 48 may be formed integrally, and of course, may be formed of independent components as needed.

Each secondary battery cell 10 having a structure in which an electrode lead 15 protrudes outward from a body may be arranged so that the electrode lead 15 faces the side plate 48, and a bus bar 80 electrically connected to the electrode lead 15 may be arranged between the side plate 48 and the secondary battery cell 10.

In addition, the lower case 40 may include an insertion part (not illustrated) in the form of a through hole located on the first plate 42 to easily insert the plurality of secondary battery cells 10, and an insulating member 20 that prevents internal components of the battery module 100 from being exposed to the outside of the first plate 42 through the insertion part (not illustrated) and is inserted into the insertion part (not illustrated) to improve adhesion to the plurality of secondary battery cells 10.

The lower case 40 may be made of a material with high thermal conductivity, such as metal, and may be made of, for example, aluminum. However, even if the material is not metal, various materials may be contained as long as they have similar strength and thermal conductivity.

Side covers 60 may each be coupled to both ends of a tubular member to which the upper case 50 and the lower case 40 are coupled.

The side cover 60 is coupled to the lower case 40 and the upper case 50, respectively, to complete the external appearance of the battery module 100. In this case, the side cover 60 may be made of a material with rigidity, and may be made of an insulating material such as resin or a conductive material such as metal.

A circuit part 70 may be interposed between the housing 30 including the upper case 50, the lower case 40, and side the cover 60, which are coupled to each other through the fastening part 1, and the plurality of secondary battery cells 10.

The circuit part 70 may be connected to the electrode leads 15 of the plurality of secondary battery cells 10 through the bus bar 80, and may be provided with a connection terminal 72 for connecting to the outside.

The connection terminal 72 of the circuit part 70 may be exposed to the outside through the terminal hole 52 formed in the upper case 50, and the terminal hole 52 of the upper case 50 may be formed to correspond to a size and shape of the connection terminal 72.

In addition, an insulating plate 90 may be interposed between the housing 30 and the bus bar 80. The insulating plate 90 is provided to ensure insulation between the housing 30 and the bus bar 80. Accordingly, the insulating plate 80 may be made of an insulating material such as resin or rubber, and may be formed in a size that faces the entire bus bar 80.

In one embodiment, the upper case 50 included in the housing member may be made of a retardant composite material including an insulating layer that includes a long inorganic fiber network and an organic binder formed by weaving a plurality of first fibers (weft) arranged in a first direction and a plurality of second fibers (warp) arranged in a second direction intersecting the first direction.

That is, the retardant composite material itself including the insulating layer may be the upper case 50.

For example, an angle at which the first fiber (weft) and the second fiber (warp) intersect may be 30 to 90°. As the long inorganic fiber network is formed by being woven in the above angle range, excellent insulation and durability may be achieved. Specifically, the angle may be 45 to 90°, and more specifically, 60 to 90°.

According to one implementation, the insulating layer may be one in which a plurality of unit insulating layers are stacked. In this case, the insulating layer may be one in which each first fiber (weft) included in each unit insulating layer is stacked in different directions.

In one embodiment, the insulating layer may be one in which 1 to 20, 1 to 10, or 4 to 8 unit insulating layers are stacked.

For example, when the insulating layer includes a first unit insulating layer, a second unit insulating layer, a third unit insulating layer, a fourth unit insulating layer, a fifth unit insulating layer, and a sixth unit insulating layer, each unit insulating layer may include an organic binder and a long inorganic fiber network formed by weaving a plurality of first fibers (weft) arranged in a first direction and a plurality of second fibers (warp) arranged in a second direction intersecting the first direction.

In this case, the direction of each first fiber (weft) included in each unit insulating layer may be stacked differently from each other, and each first fiber (weft) included in each unit insulating layer located in contact with each other may be arranged to be different by an angle exceeding 0° and 90° or less and specifically, an angle of 30° to 90°. In this case, the above-described angle range is only an example and may be freely adjusted within the above-described angle range as needed.

For example, a thickness of each unit insulating layer may independently be 0.1 mm to 15 mm, and specifically 0.3 mm to 10 mm.

In one embodiment, the long inorganic fiber included in the unit insulating layer may include long glass fiber. By including long glass fiber, excellent insulation and durability may be achieved, and the large area and reproducibility of the long glass fiber network may be easily achieved.

In addition, the long glass fiber may include a fabric in which fibers (yarns) are arranged in only one direction. For example, as the long glass fibers, unidirectional fabric, noncrimp fabric, woven fabric, etc., may be contained, but are not limited thereto.

In addition, the organic binder included in the unit insulating layer may include a curable polymer. The curable polymer may include any one or a mixture of two or more selected from the group consisting of an unsaturated polyester-based resin, an urea-formaldehyde resin, a ureabased resin, a melamine-based resin, a phenol-based resin, a resorcinol-based resin, and polyurethane. Specifically, the curable polymer may be the unsaturated polyester-based resin or the urea-formaldehyde resin resin, and more specifically, may be the unsaturated polyester-based resin.

In one embodiment, the unit insulating layer may further include inorganic filler.

By further including the inorganic filler in the unit insulating layer, it is possible to more effectively suppress the heat or flame from spreading and further improve the durability.

In detail, the temperature when a fire occurs within the battery module 100 may rise to approximately 1200°C, and the explosion may be caused by the increase in temperature and pressure inside the module. Accordingly, the retardant composite material includes a unit insulating layer, which is a composite of a woven long inorganic fiber network, an organic binder, and inorganic filler, to realize excellent insulation and durability, thereby effectively suppressing the heat or flame from spreading.

The inorganic filler may be uniformly distributed on the long inorganic fiber network. Accordingly, the structural stability may be achieved in all temperature ranges, and the long-term stability may be secured by suppressing the occurrence of dust or debris resulting from the inorganic filler.

In this case, a uniform distribution may refer to a high dispersion and a uniform distribution.

The shape of the inorganic filler is not particularly limited, and may be, for example, a granulated shape, a fibrous shape, a rod shape, a spherical shape, a plate shape, or a flake shape. Specifically, the inorganic filler may be a granulated shape.

When the inorganic filler is the granulated shape, it may be distributed more uniformly on the woven long inorganic fiber network and may effectively suppress the heat or flame from spreading.

The inorganic filler may be used without limitation as long as it may effectively prevent the heat or flame from spreading and improve the durability. For example, the inorganic filler may include any one or a mixture of two or more selected from the group consisting of metal hydroxides, mica, biotite, muscovite, sericite, metal oxides, metal carbonates, silica, diatomaceous earth, dosonite, barium sulfate, talc, clay, montmorillonite, bentonite, activated clay, sepiolite, imogolite, glass beads, silica-based balloon, aluminum nitride, boron nitride, silicon nitride, carbon black, graphite, carbon fiber, carbon balloon, charcoal powder, potassium titanate, magnesium sulfate, lead zirconate titanate, zinc stearate, calcium stearate, aluminum borate, molybdenum sulfide, silicon carbide, stainless steel fiber, zinc borate, various magnetic powders, slag fiber, fly ash, and dehydrated sludge. This is only an example and is not necessarily limited thereto.

Preferably, the inorganic filler may include one or two selected from an endothermic material and a thermally expandable material. The unit insulating layer may include an endothermic material or a thermally expandable material as inorganic filler, or may include both the endothermic material and thermally expandable material. More preferably, when both the endothermic material and thermally expandable material are included, it is possible to effectively suppress the spread of the heat or flame from spreading. In this case, the weight ratio of the endothermic material and the thermally expandable material may be 1:0.8 to 1:1.4, preferably 1:1 to 1:4.

The endothermic material may include any one or two or more selected from the group consisting of aluminum hydroxide, talc, calcium carbonate, diatomaceous earth, titanium oxide, zeolite, or white carbon, but is not necessarily limited thereto. The endothermic material is capable of performing an endothermic function through a dehydration reaction, and may be used without limitation as long as it may quickly absorb high-temperature heat in the event of a fire within the module. Specifically, the endothermic material starts an endothermic reaction at a temperature of 110°C or higher, and may exhibit more than 50% of the total endotherm performance, for example, 50% to 80% of the total endotherm performance in the temperature range of 110°C to 150°C. More specifically, the endothermic material may be aluminum hydroxide.

The thermally expandable material may include any one or two or more selected from the group consisting of mica, biotite, muscovite, vermiculite, kaolin, thermally expandable graphite, perlite, and bentonite, but is not necessarily limited thereto. The thermal expandable material may be used without limitation as long as it may block the space through which the heat or flame moves or prevent the heat or flame from spreading. Specifically, the thermally expandable material may be mica.

Preferably, the inorganic filler may be used together with aluminum hydroxide and mica. In the event of the fire within the module, the heat is quickly absorbed by aluminum hydroxide to suppress the temperature inside the battery module from rising, and at the same time, block the spread of the flame to the mica, thereby implementing the best performance.

In one embodiment, when the unit insulating layer is projected in a direction perpendicular to the surface, the inorganic filler on the woven long inorganic fiber network may be included to have an area fraction of 80% or more based on the total area of the unit insulating layer surface. Within the above range, it is possible to effectively suppress the heat or flame from spreading and implement the excellent durability. Specifically, the area fraction may be 85% or more, preferably 90% or more, and substantially 99% or less.

In one embodiment, an average diameter of the inorganic filler may be 1µm to 50µm. Within the above range, the inorganic filler may be uniformly distributed in the long inorganic fiber network to implement the excellent insulation and durability. Specifically, the average diameter may be 5µm to 40µm, preferably 10µm to 30µm.

In addition, the unit insulating layer may further include additives such as the flame retardant known in the art.

In one embodiment, the unit insulating layer may independently include 40 to 80wt% of long inorganic fiber, 10 to 30wt% of organic binder, 1 to 15wt% of inorganic filler, and 5 to 20wt% of additives, based on the total weight. Within the above-described range, it is possible to effectively suppress the heat or flame from spreading. preferably, the unit insulating layer may include 50 to 80wt% of long inorganic fiber, 12 to 18wt% of organic binder, 2 to 8wt% of inorganic filler, and 10 to 20wt% of additives based on the total weight. More specifically, the unit insulating layer may include 50 to 80wt% of long inorganic fiber, 14 to 18wt% of organic binder, and 4 to 8wt% of inorganic filler based on the total weight.

As described above, the upper case 50 may be made of the retardant composite material including the insulating layer including the plurality of unit insulating layers described above.

In one embodiment, the plurality of unit insulating layers may independently include the short inorganic fiber and the organic binder. More specifically, the unit insulating layer including the short inorganic fiber and the organic binder may be located on the outermost side of the retardant composite material.

In this case, the organic binder is the same or similar to the organic binder included in the above-described unit insulating layer, and detailed description thereof will be omitted.

As the first unit insulating layer and the second unit insulating layer, which are located on the outermost side of the retardant composite material, each include the short inorganic fiber and the organic binder, it is possible to improve the formability of the retardant composite material and facilitate the coupling with the metal member described later, so the retardant composite material itself may be applied to the upper case 50.

In one embodiment, the short inorganic fiber may include any one or two or more selected from the group consisting of glass fiber, silica fiber, alumina fiber, alumina silicate fiber, zirconia fiber, or mineral-based fiber. Specifically, the short inorganic fiber may be glass fiber chop.

In the case of the glass fiber chop, the excellent formability may be achieved and moisture or foreign substances may be effectively prevented from passing into the module. An average length of the glass fiber chops may be 10 to 50 mm. Within the above range, the excellent formability may be achieved and the moisture and foreign substances may be prevented from passing. preferably, the average length may be 20 to 30 mm.

In one embodiment, the first unit insulating layer and the second unit insulating layer located on the outermost side of the retardant composite material may further include an inorganic reinforcing material independently. The durability may be improved by including the inorganic reinforcing material, the inorganic filler may include any one or a mixture of two or more selected from the group consisting of metal oxides, metal hydroxides, metal carbonates, silica, diatomaceous earth, dooxonite, barium sulfate, talc, clay, mica, biotite, muscovite, sericite, montmorillonite, bentonite, activated clay, sepiolite, imogolite, glass beads, silica-based balloon, aluminum nitride, boron nitride, silicon nitride, carbon black, graphite, carbon fiber, carbon balloon, charcoal powder, potassium titanate, magnesium sulfate, lead zirconate titanate, zinc stearate, calcium stearate, aluminum borate, molybdenum sulfide, silicon carbide, stainless steel fiber, zinc borate, various magnetic powders, slag fiber, fly ash, and dehydrated sludge. The inorganic reinforcing material is not particularly limited, but may specifically be alumina.

In one embodiment, the first unit insulating layer and the second unit insulating layer may independently include short inorganic fiber: organic binder of a weight ratio of 4:6 to 9:1, preferably 5:5 to 9:1, and more preferably 6:4 to 8:2.

In one embodiment, the thickness of the first unit insulating layer and the second unit insulating layer may be independently 0.1 mm to 10 mm, and preferably 0.3 mm to 5.1 mm, but the thickness of the unit insulating layer is only an example, and the present disclosure is not limited thereto.

As the thickness of the first unit insulating layer and the second unit insulating layer satisfies the above-described range, the formability of the retardant composite material may be improved, and thus the retardant composite material itself may be applied to the upper case 50.

In this case, of course, the thicknesses of the first unit insulating layer and the second unit insulating layer may be different or the same.

In one embodiment, the thickness ratio of the first unit insulating layer and the second unit insulating layer, which are located on the outermost side of the retardant composite material and include the short inorganic fiber and the organic binder, may be 1: 1 to 1:15, and preferably 1:1 to 1:10, but the thickness ratio is only an example, and the present disclosure is not limited by the thickness ratio.

In order to improve the formability of the retardant composite material and at the same time effectively suppress the heat or flame from spreading, it is advantageous for the thickness ratio of the first unit insulating layer and the second unit insulating layer to satisfy the above-described range.

In one embodiment, the upper case 50 made of the above-described retardant composite material may further include a metal member.

As described above, the upper case 50 made of the above-described retardant composite material itself may maintain its structure even in the high-temperature flame to effectively suppress the heat or flame from spreading, but the elongation characteristics are poor, and thus, there may be a risk of damage to the fastening part 1 where stress is concentrated due to the swelling phenomenon of the secondary battery cell.

However, as the upper case 50 further includes the metal member, the structural rigidity of the upper case 50 including the fastening part 1 may be improved to withstand the concentrated stress caused by the swelling phenomenon of the secondary battery cell.

As a non-limiting example, the metal member may include, but is not limited to, metals such as iron, gold, silver, nickel, chromium, titanium, stainless steel, copper, molybdenum, etc. Any metal with excellent high melting point elongation characteristics may be used without limitation.

In this case, the metal member may be located on the outermost side or inside the upper case 50.

That is, when the metal member is located on the outermost side of the upper case 50 made of the retardant composite material including the insulating layer including the plurality of unit insulating layers, the metal member may be located on the first unit insulating layer or the second unit insulating layer that is located on the outermost side of the retardant composite material and exposed to the outside and includes the short inorganic fiber and the organic binder, and may be located between the layers of the plurality of unit insulating layers included in the insulating layer when located inside.

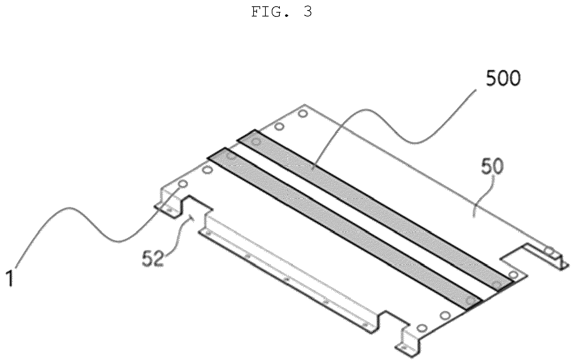

FIG. 3 is an enlarged perspective view of the upper case 50 further including a metal member 500 according to one embodiment.

Referring to FIG. 3, the metal member 500 may be connected to the fastening part 1 located at both ends of the upper case 50.

The plurality of fastening parts 1 for coupling with the side cover 60 and the lower case 40 are located at both ends.

That is, the metal member 500 may be connected to the fastening parts 1 located opposite to each other at both ends of the upper case 50 to be located in a longitudinal direction of the upper case 50 or in a direction perpendicular to the longitudinal direction and located both in the longitudinal direction and the direction perpendicular to the longitudinal direction.

Accordingly, as at least one metal member 500 is included in connection with the fastening parts 1 located at both ends, the structural rigidity of the upper case 50 made of the retardant composite material may be improved.

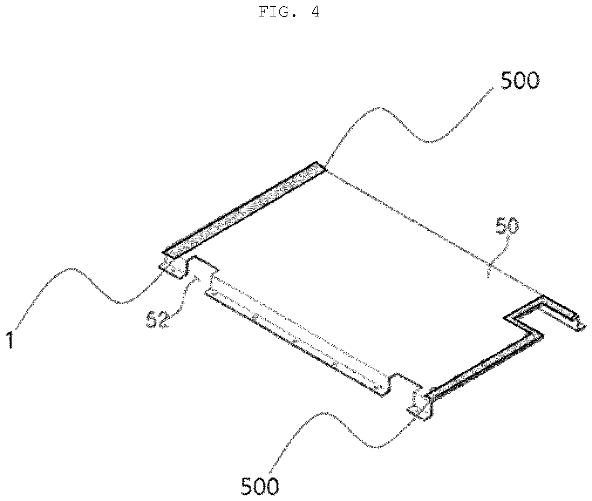

FIG. 4 is an enlarged perspective view of the upper case 50 further including the metal member 500 according to another embodiment.

Referring to FIG. 4, the metal member 500 may have two or more fastening parts 1 located at one end of the upper case 50 in continuous contact with the metal member 500.

In addition, the metal member 500 has the same shape as the shape of one end of the upper case 50 where the fastening part 1 is located, and thus, may be located in contact with all the fastening parts 1 located at the one end. Accordingly, it is possible to effectively prevent damage to the fastening part 1 due to the module deformation caused by the swelling phenomenon of the secondary battery cell.

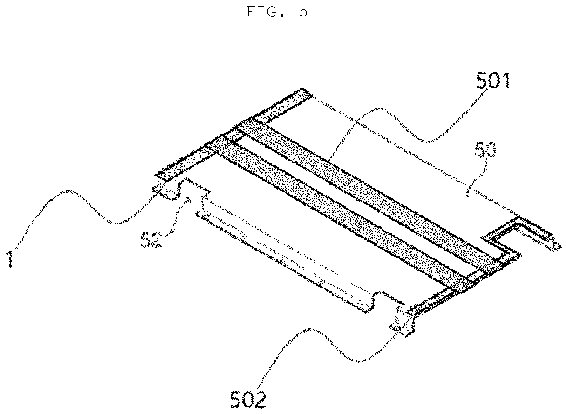

FIG. 5 is an enlarged perspective view of the upper case 50 further including the metal member 500 according to another embodiment.

Referring to FIG. 5, the upper case 50 includes a first metal member 501 located in connection with the fastening part 1 located at both ends of the upper case 50, and a second metal member 502 that has the same shape as the shape of one end of the upper case 50 and is located in contact with all the fastening parts 1 located at the one end.

In this case, the fastening part 1 is in double contact with the first metal member 501 and the second metal member 502, thereby further improving the structural rigidity of the upper case 50.

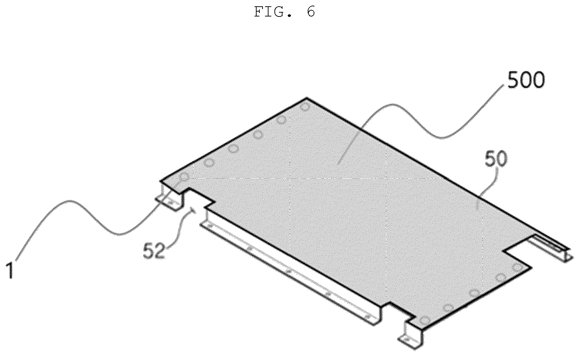

FIG. 6 is an enlarged perspective view of the upper case 50 further including the metal member 500 according to another embodiment.

Referring to FIG. 6, the metal member 500 may be located on at least one surface of the upper case 50, including the fastening part 1.

That is, the metal member 500 has the same shape as one surface of the upper case 50 including the fastening part 1 and thus, may be located to correspond to the entire surface of the upper case 50.

Accordingly, there is an effect of improving the elongation characteristics of the entire surface of the upper case 50 and at the same time effectively preventing damage to the fastening part 1.

As a non-limiting and specific example, various holes may be formed in the upper case 50 depending on the design of the battery module. Accordingly, it goes without saying that holes may also be formed in the insulating layer included in the upper case 50 and the metal member 500 located on at least one surface of the upper case 50.

In addition, one embodiment of the present disclosure may provide a battery pack including the battery module.

As described above, a battery pack including a battery module including a housing member made of the retardant composite material that may have excellent structural rigidity and suppress the heat or flame from spreading when the secondary battery cell ignites may effectively block the thermal runaway phenomenon caused by the ignition of the secondary battery cell, thereby improving the stability.

Hereinafter, examples of the present disclosure will be described in detail. The following examples are intended to illustrate the present disclosure, but the present disclosure is not limited to the following examples. In this case, if there is no other definition in the technical and scientific terms used, they have the meaning commonly understood by those skilled in the art in the technical field to which the present disclosure belongs In addition, repeated descriptions of the same technical configuration and operation as in the past will be omitted.

### (Preparation Example) Preparation of retardant composite material

Each retardant composite material with a thickness of 1 mm was prepared as compositions shown in Table 1 below.

**(Table 1) In addition, in Preparation Example 1 and Preparation**

| | | **Preparation Example 1** | **Preparation Example 2** | **Preparation Example 3** |
|---|---|---|---|---|
| **First unit insulating layer** | **Inorganic fiber** | 50 wt% of short glass fiber | 50 wt% of short glass fiber | X |
| | **Binder** | 50 wt% of unsaturated polyester | 50 wt% of unsaturated polyester | |
| **Second unit insulating layer** | **Inorganic fiber** | 50 wt% of short glass fiber | 50 wt% of short glass fiber | X |
| | **Binder** | 50 wt% of unsaturated polyester | 50 wt% of unsaturated polyester | |
| **Third unit insulating layer to eighth unit insulating layer** | **Inorganic fiber** | 67 wt% of woven long glass fiber | 67 wt% of woven long glass fiber | 67 wt% of woven long glass fiber |
| | **Binder** | 13 wt% of unsaturated polyester | 13 wt% of unsaturated polyester | 13 wt% of unsaturated polyester |
| | **Inorganic filler** | 4 wt% of aluminum trihydroxide 5 wt% of mica | 4 wt% of aluminum trihydroxide 5 wt% of mica | 4 wt% of aluminum trihydroxide 5 wt% of mica |
| | **Flame retardant** | 11 wt% of phosphorusbased flame retardant | 11 wt% of phosphorusbased flame retardant | 11 wt% of phosphorusbased flame retardant |

Example 2 excluding Preparation Example 3, a short glass fiber included in first unit and second unit insulating layers located on an outermost side of a retardant composite material used a glass fiber chop with a length of 25.4 mm, and a woven long glass fiber was used in which a first fiber (weft) and a second fiber (warp) intersect at 60°.

In addition, in Preparation Example 1 and Preparation Example 2, an insulating layer in which a total of 8 unit insulating layers are stacked was prepared, and in Preparation Example 1, in an insulating layer in which a third unit insulating layer/fourth unit insulating layer/fifth unit insulating layer/sixth unit insulating layer/seventh unit insulating layer/eighth unit insulating layer/ are stacked, a first fiber (weft) included in each unit insulating layer was arranged to be 90°, -45°, 45°, 90°, and 0°, respectively, based on an arrangement direction of the first fiber (weft) included in the third unit insulating layer (0°), and in Preparation Example 2, the first fiber (weft) included in each unit insulating layer was arranged parallel to the arrangement direction of the first fiber (weft) included in the third unit insulating layer.

### (Example 1)

An upper case was prepared by forming a retardant composite material of Preparation Example 1 in a housing member composed of a lower case, a side cover, and an upper case. In this case, the lower case and the side cover made of aluminum were used.

Next, a battery module was manufactured by accommodating a plurality of secondary battery cells in the housing member and then fastening bolts and nuts to each fastening part.

### (Example 2)

Example 2 was performed in the same manner as Example 1 except that an upper case was prepared by forming a retardant composite material of Preparation Example 2.

### (Example 3)

A battery module was manufactured in the same manner as Example 1 except that ferrous metal bars were connected to fastening parts located at both ends of the prepared upper case and then bolts and nuts were fastened to the fastening parts.

### (Example 4)

A battery module was manufactured in the same manner as in Example 1 except that ferrous metal bars were located to be joined to fastening parts located at both ends of an upper case in a length direction and then bolts and nuts were fastened to the fastening parts.

### (Example 5)

A battery module was manufactured in the same manner as in Example 1 except that the ferrous metal bars used in Examples 3 and 4 were located at the same time and then bolts and nuts were fastened to fastening parts.

### (Example 6)

A battery module was manufactured in the same manner as in Example 1 except that ferrous metal plate was located to contact the entire upper surface of an upper case including fastening parts and then bolts and nuts were fastened to the fastening parts.

### (Comparative Example 1)

Comparative Example 1 was performed in the same manner as Example 1 except that an upper case was prepared by forming a retardant composite material of Preparation Example 3.

### (Comparative Example 2)

A battery module was manufactured in the same manner as in Example 1, except that an upper case made of aluminum was used instead of an upper case prepared by forming a retardant composite material of Preparation Example 1.

### (Evaluation Example)

Referring to the GB/T -38031 safety test, which is one of safety tests for a battery module, a thermal runaway situation was intentionally simulated by igniting one arbitrary battery cell accommodated in a battery module to be higher than or equal to 1200°C. The thermal runaway phenomenon continued for 30 minutes to confirm whether the battery module was exploded.

As a result of the evaluation, it was confirmed that in the case of Comparative Example 2, which includes an upper case made of aluminum, a hole was generated in the upper case and a flame spread rapidly within 5 minutes based on the time of intentional ignition.

On the other hand, in the case of Examples 1 to 6, it was confirmed that the hole was not formed in the upper case, so the spread speed of the flame could be drastically delayed.

Among these, it was observed that in the case of Examples 3 to 6, in which the upper case further included a metal member, the flame did not spread even after 8 minutes, and thus, the spread delay effect of the flame was relatively excellent. In particular, in the case of Examples 5 and 6, it was confirmed that the spread delay effect of the flame was the most excellent.

According to the present disclosure, a battery module including a housing member comprising a retardant composite material has structural stability in which holes are not locally generated even in a high-temperature flame, thereby effectively suppressing the heat or flame from spreading.

In addition, the battery module including a housing member comprising a retardant composite material according to the present disclosure has excellent structural rigidity, thereby withstanding stress intensively generated due to a swelling phenomenon of a secondary battery cell within the battery module.

Although the embodiments of the present disclosure have been described above, the present disclosure is not limited to the above embodiments, but may be manufactured in a variety of different forms, and those of ordinary skill in the art to which the present disclosure pertains will understand that the present disclosure may be implemented in other specific forms without changing the technical spirit or essential features of the present disclosure. Therefore, it should be understood that the above-mentioned embodiments are exemplary in all aspects but are not limited thereto.

## Claims

1. A battery module(100) in which a plurality of secondary battery cells(10) are accommodated in a housing member(30) including an upper case(50), a lower case(40), and a side cover(60) that are coupled to each other through a fastening part(1),
wherein the upper case(50) is made of a retardant composite material including an insulating layer that includes a long inorganic fiber network and an organic binder formed by weaving a plurality of first fibers (weft) arranged in a first direction and a plurality of second fibers (warp) arranged in a second direction intersecting the first direction.

2. The battery module of claim 1, wherein the upper case(50) further includes a metal member(500).

3. The battery module of claim 2, wherein the metal member (500) is located on the outermost side or inside the upper case.

4. The battery module of any of claims 2 or 3, wherein the metal member (500) is located to be connected to one or more fastening parts (1) located at both ends of the upper case(50).

5. The battery module of any of claims 2 to 4, wherein two or more fastening parts(1) located at one end of the upper case(50) are located in continuous contact with the metal member(500) .

6. The battery module of any of claims 2 to 5, wherein the metal member(500) includes the fastening part(1) and is located on at least one surface of the upper case(50).

7. The battery module of any of claims 1 to 6 , wherein the insulating layer has a plurality of unit insulating layers stacked therein.

8. The battery module of claim 7, wherein a direction of the first fiber (weft) of each unit insulating layer located in contact with the plurality of unit insulating layers is the same or different from each other.

9. The battery module of any of claims 7 or 8, wherein the insulating layer has one to ten unit insulating layers stacked therein.

10. The battery module of any of claims 7 to 9, wherein the unit insulating layer further includes inorganic filler including one or two selected from an endothermic material and a thermally expandable material.

11. The battery module of claim 10, wherein the endothermic material includes one or two or more selected from the group consisting of aluminum hydroxide, talc, calcium carbonate, diatomaceous earth, titanium oxide, zeolite, or white carbon.

12. The battery module of any of claims 10 or 11, wherein the thermally expandable material includes one or two or more selected from the group consisting of mica, biotite, muscovite, vermiculite, kaolin, thermally expandable graphite, perlite, and bentonite.

13. The battery module of any of claims 1 to 12, wherein the long inorganic fiber includes glass long fiber.

14. The battery module of any of claims 1 to 13, wherein the organic binder includes a curable polymer including unsaturated polyester.

15. A battery pack including a battery module(100) in which a plurality of secondary battery cells(10) are accommodated in a housing member(30) including an upper case(50), a lower case(40), and a side cover(60) that are coupled to each other through a fastening part(10),
wherein the upper case(40) is made of a retardant composite material including an insulating layer that includes a long inorganic fiber network and an organic binder formed by weaving a plurality of first fibers (weft) arranged in a first direction and a plurality of second fibers (warp) arranged in a second direction intersecting the first direction.
